# EUROPÄISCHE PATENTSCHRIFT

(11) **EP 1 121 477 B1**
(45) Veröffentlichungstag und Bekanntmachung des Hinweises auf die Patenterteilung: **09.04.2003**
(21) Anmeldenummer: 99944556.2
(22) Anmeldetag: 28.08.1999
(51) Int. Cl.: C25B 1/00

(54) **ELEKTROCHEMISCHE HERSTELLUNG AMORPHER ODER KRISTALLINER METALLOXIDE MIT TEILCHENGRÖSSEN IM NANOMETERBEREICH**
ELECTROCHEMICAL PRODUCTION OF AMORPHOUS OR CRYSTALLINE METAL OXIDES WITH PARTICLE SIZES IN THE NANOMETER RANGE
PRODUCTION PAR VOIE ELECTROCHIMIQUE D'OXYDES METALLIQUES AMORPHES OU CRISTALLINS PRESENTANT DES DIMENSIONS DE PARTICULES DE L'ORDRE DU NANOMETRE

(30) Priorität: 07.09.1998 DE 19840842
(43) Veröffentlichungstag der Anmeldung: 08.08.2001
(73) Patentinhaber: Henkel Kommanditgesellschaft auf Aktien, 40589 Düsseldorf-Holthausen (DE)
(72) Erfinder: HEMPELMANN, Rolf, D-66386 St. Ingbert (DE); NATTER, Harald, D-66117 Saarbrücken (DE)
(86) Internationale Anmeldenummer: EP9906368
(87) Internationale Veröffentlichungsnummer: WO00014302

(56) Entgegenhaltungen:
- US-A- 4 067 788
- US-A- 4 233 351
- US-A- 4 882 014
- G. ZOTTI: "electrodeposition of amorphous fe2o3 films by reduction of iron perchlorate in acetonitrile" J.ELECTROCHEM. SOC., Bd. 145, Nr. 2, Februar 1998 (1998-02), Seiten 385-389, XP002127642

## Beschreibung

Die Erfindung betrifft ein Verfahren zur Herstellung pulverförmiger amorpher und/oder kristalliner Oxide von Metallen der dritten bis fünften Hauptgruppe oder der Nebengruppen, die mittlere Teilchendurchmesser im Nanometerbereich haben. Hierunter wird im Sinne dieser Erfindung der Bereich von etwa 1 bis etwa 500 Nanometer verstanden. Insbesondere haben die nach dem erfindungsgemäßen Verfahren herstellbaren amorphen oder kristalline Metalloxide Teilchendurchmesser im Bereich von etwa 5 bis etwa 100 Nanometer. Derartige Metalloxide können unterschiedliche technische Verwendung finden: als Dielektrika für miniaturisierte Vielschichtkondensatoren, als Katalysatoren, als Zusätze in Farben und in Kosmetika, als Zusätze zu Kunststoffen, um diese gegen thermische oder photochemische Zersetzung zu stabilisieren und/oder ihre dielektrischen und/oder magnetischen Eigenschaften zu verändern, und als Poliermittel.

Metalloxide mit Teilchendurchmessern im Nanometerbereich können beispielsweise dadurch erhalten werden, daß man Alkoxide der Metalle in einem nicht mit Wasser mischbaren Lösungsmittel löst, unter Verwendung geeigneter Tenside eine Emulsion dieser Lösung in Wasser herstellt, bei der die emulgierten Tröpfchen des Lösungsmittels Durchmesser im Nanometerbereich haben, und die Metallalkoxide zu den Oxiden hydrolysiert. Die Nachteile dieses Verfahrens liegen insbesondere darin, daß die Metallalkoxide teure Ausgangsstoffe darstellen, daß zusätzlich Emulgatoren verwendet werden müssen und daß die Herstellung der Emulsion mit Tröpfchengrößen im Nanometerbereich einen aufwendiger Verfahrensschritt darstellt.

Weiterhin ist es bekannt, Metallpartikel (nicht Metalloxidpartikel!) mit einer Teilchengröße unter 30 nm dadurch herzustellen, daß man geeignete Metallsalze in Gegenwart eines Stabilisators und ggf. unter Zusatz eines Leitsalzes in organischen Lösungsmitteln oder in deren Gemischen mit Wasser kathodisch reduziert. Anstelle des Auflösens von Metallsalzen in dem Elektrolyten kann man die kathodisch zu reduzierenden Metallionen auch dadurch in Lösung bringen, daß man Anoden aus den entsprechenden Metallen verwendet, die sich während der Elektrolyse auflösen. Ein solches Verfahren ist beschrieben in der DE-A-44 43 392.

Aus der DE-A-44 08 512 ist weiterhin ein Verfahren zur elektrolytischen Herstellung von Metallkolloiden bekannt, bei dem man ein oder mehrere Metalle der IV., VII., VIII. und I.b Gruppe des Periodensystems anodisch in Gegenwart eines Leitsalzes in aprotischen organischen Lösungsmitteln löst und kathodisch in Gegenwart von Stabilisatoren zu kolloidalen Metallösungen oder redispergierbaren Metallkolloidpulvern mit einer Teilchengröße unter 30 nm reduziert. Dabei können das Leitsalz und der Stabilisator identisch sein. Führt man die kathodische Reduktion in Gegenwart geeigneter Träger durch, so schlagen sich die Metallkolloide auf diesen Trägern nieder.

Weiterhin ist es gemäß dem Chemical Abstracts Referat 110:65662 möglich, feinteiliges Zirkonoxidpulver dadurch herzustellen, daß man in einer Lösung von Zirkonylnitrat auf elektrochemischem Wege eine Base erzeugt, durch die das Zirkonylnitrat unter Abscheidung von hydratisiertem Zirkonoxid hydrolisiert wird. Durch Calcinierung kann aus dem hydratisierten Zirkonoxid kristallines Zirkonoxid erhalten werden. Gemäß dem Chemical Abstracts Referat 114:31811 lassen sich Mischoxide von Eisen, Nickel und Zink dadurch herstellen, daß man aus Metallsalzlösungen ein Hydroxidgemisch dieser Metalle elektrochemisch ausfällt und die isolierten Hydroxide zu den Mischoxiden calciniert.

In J. Electrochem. Soc., Vol. 145, No. 2 (Februar 1998), Seiten 385 bis 389, "Electrodeposition of Amorphous Fe₂O₃ Films by Reduction of Iron Perchlorate in Acetonitrile" beschreiben G. Zotti et all. ein Verfahren zur galvanischen Abscheidung von dünnen Eisenoxidfilmen auf Elektroden. Die dünnen Filme aus Eisenoxid im Nanometerbereich werden elektrochemisch durch Reduktion von in sauerstoffhaltigem Acetonitril-Elektrolyt gelösten Eisenperchloraten gewonnen.

Die Erfindung stellt sich die Aufgabe, ein neues Verfahren zur Verfügung zu stellen, um pulverförmige amorphe und/oder kristalline Oxide von Metallen bzw. Mischoxide von mehreren Metallen herzustellen, die mittlere Teilchendurchmesser im Bereich von etwa 1 bis etwa 500 nm haben.

Die Erfindung betrifft demnach ein Verfahren zur Herstellung pulverförmiger amorpher und/oder kristalliner Oxide von Metallen der dritten bis fünften Hauptgruppe oder der Nebengruppen des Periodensystems, die mittlere Teilchendurchmesser im Bereich von 1 bis 500 nm haben, dadurch gekennzeichnet, daß man in einem organischen Elektrolyten gelöste lonen dieser Metalle in Gegenwart eines Oxidationsmittels unter Verwendung einer Kathode und einer Anode an der Kathode elektrochemisch reduziert, wobei man den Elektrolyten bewegt und/oder ihn mit Ultraschall durchstrahlt.

In diesem Verfahren ist der mittlere Teilchendurchmesser durch Variation der Temperatur des Elektrolyten, der elektrischen Spannung bzw. Stromstärke sowie durch die Art des fakultativ zu verwendenden Leitsalzes einstellbar. Vorzugsweise führt man das Verfahren derart durch, daß die erhaltenen Metalloxide mittlere Teilchendurchmesser im Bereich von etwa 5 bis etwa 100 nm haben.

Nach diesem Verfahren lassen sich nur solche Metalloxide herstellen, die bei einer Temperatur unter etwa 100 °C nicht mit Feuchtigkeit zu Hydroxiden reagieren. Demnach eignet sich das Verfahren nicht zur Herstellung von Oxiden von Alkali- oder Erdalkalimetallen. Es ist insbesondere geeignet zur Herstellung von Oxiden von solchen Metallen, die bei Temperaturen unterhalb von etwa 100 °C von Luftsauerstoff oxidiert werden. Bei Verwendung derartiger Metalle kann das erfindungsgemäße Verfahren bei Temperaturen unter 100 °C unter Verwendung von Luft als Oxidationsmittel durchgeführt werden. Dies erlaubt eine technisch wenig aufwendige Verfahrensführung. Das Verfahren eignet sich besonders zur Herstellung amorpher und/oder kristalliner Oxide von Ti, Zr, Cr, Mo, Fe, Co, Ni und Al.

Als organischen Elektrolyt wählt man vorzugsweise eine Substanz, die im Temperaturbereich zwischen etwa -78 °C und etwa +120 °C bei Normaldruck flüssig ist. Insbesondere wählt man vorzugsweise eine Substanz, die im Temperaturbereich zwischen etwa 0 und etwa 60 °C bei Normaldruck flüssig ist. Vorzugsweise wählt man den organischen Elektrolyt aus aus Alkoholen, Ketonen, Ethern, Nitrilen und aromatischen Verbindungen, wobei solche bevorzugt sind, die in den genannten Temperaturbereichen flüssig sind. Als Elektrolyt eignen sich insbesondere Tetrahydrofuran, Aceton, Acetonitril, Toluol und deren Mischungen mit Alkoholen.

Je nach herzustellendem Metalloxid kann es günstig sein, wenn der Elektrolyt geringe Mengen an Wasser enthält. Beispielsweise kann der Wassergehalt des organischen Elektrolyten im Bereich von etwa 0,01 bis etwa 2 Gew.-% und insbesondere im Bereich von etwa 0,05 bis etwa 1 Gew.-% liegen, wobei sich die Prozentangaben auf die Gesamtmenge des organischen Elektrolyten und des Wassers beziehen.

Sollte der Elektrolyt nicht von sich aus eine ausreichende elektrische Leitfähigkeit aufweisen oder dadurch erhalten, daß man in ihm Salze derjenigen Metalle auflöst, deren Oxide man herstellen will, ist es empfehlenswert, in dem Elektrolyten ein Leitsalz aufzulösen. Hierbei können die gängigen Leitsalze verwendet werden, die man üblicherweise einsetzt, um den genannten Elektrolyten eine für elektrochemische Prozesse ausreichende elektrische Leitfähigkeit zu verleihen. Als solche Leitsalze eignen sich beispielsweise im Elektrolyten lösliche Hexafluorophosphate, Sulfonate, Acetylacetonate, Carboxylate und insbesondere quaternäre Phosphonium- und/oder Ammoniumsalze mit organischen Resten am Phosphor bzw. am Stickstoff. Vorzugsweise setzt man quaternäre Ammoniumverbindungen ein, die Aryl- und/oder Alkylgruppen am Stickstoff tragen und vorzugsweise als Halogenide vorliegen. Ein besonders geeignetes Beispiel ist Tetrabutylammoniumbromid.

Dabei arbeitet man vorzugsweise in einem Temperaturbereich, bei dem das Leitsalz in dem organischen Elektrolyten in ausreichendem Maße löslich ist. Vorzugsweise führt man das erfindungsgemäße Verfahren so durch, daß der organische Elektrolyt eine Temperatur im Bereich von etwa 30 bis etwa 50 °C hat. Verwendet man Tetrahydrofuran als Elektrolyt und Tetrabutylammoniumbromid als Leitsalz, ist es dabei vorzuziehen, bei Temperaturen oberhalb von 35 °C, beispielsweise im Bereich zwischen 35 °C und 40 °C zu arbeiten.

Die Leitsalze haben den zusätzlichen Effekt, daß sie die entstehenden Oxidpartikel vor Agglomeration schützen. Hierdurch kann eine sehr enge Teilchengrößenverteilung erreicht werden. Wie in einem nachfolgenden Ausführungsbeispiel beschrieben, läßt sich so beispielsweise Zirkondioxid mit einer volumengemittelten Kristallitgröße von 8 nm herstellen, wobei die Teilchengrößenverteilung, ausgedrückt als logarithmische Normalverteilung, einen Sigma-Wert von 1,29 aufweist. Legt man keinen Wert auf eine enge Teilchengrößenverteilung, kann man auf Zusatz der Leitsalze verzichten, wenn der Elektrolyt aufgrund der gelösten Salze des als Oxid abzuscheidenden Metalls eine ausreichende elektrische Leitfähigkeit aufweist.

Erfindungsgemäß entstehen die Metalloxide dadurch, daß man die Ionen der Metalle in Gegenwart eines Oxidationsmittels an einer Kathode elektrochemisch reduziert. Das am einfachsten einzusetzende Oxidationsmittel, dessen Verwendung demnach bevorzugt ist, ist der Sauerstoff der Luft. Demnach führt man das Verfahren vorzugsweise so durch, daß man während der elektrochemischen Reduktion der Metallionen Luft in den Elektrolyten einleitet. Erwünschtenfalls kann auch mit Sauerstoff angereicherte Luft oder weitgehend reiner Sauerstoff in den Elektrolyten eingeleitet werden. Weitere geeignete, jedoch weniger bevorzugte Oxidationsmittel sind Wasserstoffperoxid, organische oder anorganische Peroxoverbindungen oder Oxoanionen der Halogene Chlor, Brom oder Jod, bei denen das Halogen eine Oxidationsstufe zwischen +1 und +5 aufweist. Bei der Verwendung stärkerer Oxidationsmittel als Luftsauerstoff ist jedoch darauf zu achten, daß keine Peroxidbildung mit dem Elektrolyten eintritt.

Die elektrische Gleichspannung zwischen Kathode und Anode stellt man vorzugsweise so ein, daß bei einer Anoden- und Kathodenfläche von jeweils 800 mm² ein Stromfluß in der Größenordnung von etwa 5 bis etwa 100 mA, insbesondere im Bereich von etwa 10 bis etwa 50 mA eintritt. Bei einem ausreichend leitfähigen Elektrolyten läßt sich dies dadurch erreichen, daß man zwischen Kathode und Anode eine elektrische Gleichspannung im Bereich von etwa 1 bis etwa 100 Volt anlegt.

Während der Durchführung des Verfahrens hält man den Elektrolyten in möglichst starker Bewegung. Dies kann beispielsweise dadurch geschehen, daß man den Elektrolyten rührt. Zusätzlich oder alternativ hierzu kann man den Elektrolyten mit Ultraschall durchstrahlen. Die Elektrolytbewegung und/oder das Durchstrahlen mit Ultraschall haben den Vorteil, daß die gebildeten Metalloxide nicht an der Kathode haften bleiben und diese mit einer isolierenden Schicht überziehen.

Die Ionen des Metalls oder derjenigen Metalle, deren Oxide bzw. Mischoxide man herstellen will, können auf unterschiedliche Weise in den Elektrolyten gelangen. Beispielsweise kann man eine Anode verwenden, die dasjenige Metall enthält, dessen Oxid hergestellt werden soll, und die sich während der Herstellung der Oxide anodisch auflöst. Die Anode kann also beispielsweise aus demjenigen Metall bestehen, dessen Oxid man herstellen will. Oder man verwendet eine Anode aus einem inerten Material, die man mit demjenigen Metall überzogen hat, dessen Oxid man herstellen will. In letzterem Falle löst sich während der elektrochemischen Herstellung des Metalloxids das entsprechende Metall anodisch von der Anode ab.

Wünscht man ein Oxid nur eines Metalles herzustellen, verwendet man eine Elektrode, die nur aus diesem Metall besteht oder von ihm überzogen ist. Das erfindungsgemäße Verfahren erlaubt es aber auch, Mischoxide von verschiedenen Metallen herzustellen. Hierfür kann man entweder eine Anode verwenden, die aus diesen verschiedenen Metallen besteht oder mit ihnen überzogen ist. Alternativ kann man mit mehreren Anoden arbeiten, die aus jeweils verschiedenen Metallen bestehen oder mit diesen überzogen sind. Die letztere Vorgehensweise hat den Vorteil, daß man zwischen der Kathode und den verschiedenen Anoden unterschiedliche Spannungen anlegen kann, um den unterschiedlichen Lösungspotentialen der verschiedenen Metalle Rechnung zu tragen.

Das erfindungsgemäße Verfahren kann jedoch auch so durchgeführt werden, daß man eine inerte Anode verwendet und daß man ein Salz desjenigen oder Salze derjenigen Metalle in dem Elektrolyten auflöst, dessen Oxid oder deren Mischoxid hergestellt werden sollen. Selbstverständlich muß man hierbei Salze wählen, die in dem verwendeten Elektrolyten eine ausreichende Löslichkeit haben. Bei Verwendung von Tetrahydrofuran als Elektrolyt sind beispielsweise in der Regel Chloride oder Nitrate der jeweiligen Metalle geeignet.

Als Kathodenmaterial und gegebenenfalls Anodenmaterial wählt man vorzugsweise ein Material, das unter den gewählten Elektrolysebedingungen inert ist. Geeignet sind beispielsweise Elektroden aus Platin oder sonstigen Platinmetallen, Gold, Edelstahl, Titan oder Glaskohlenstoff.

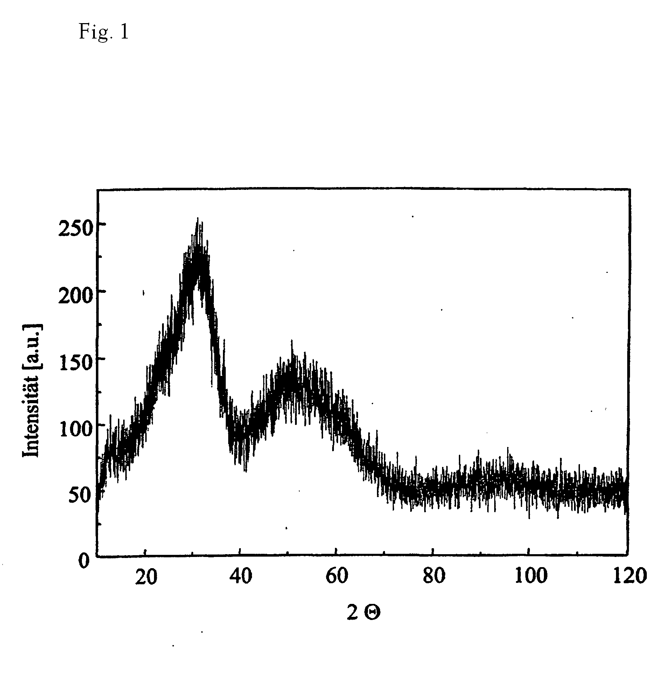

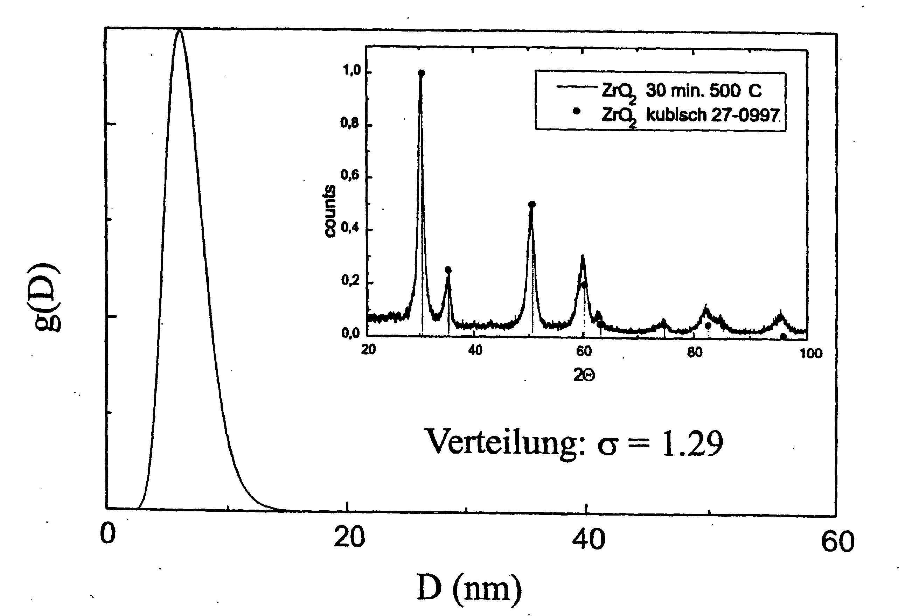

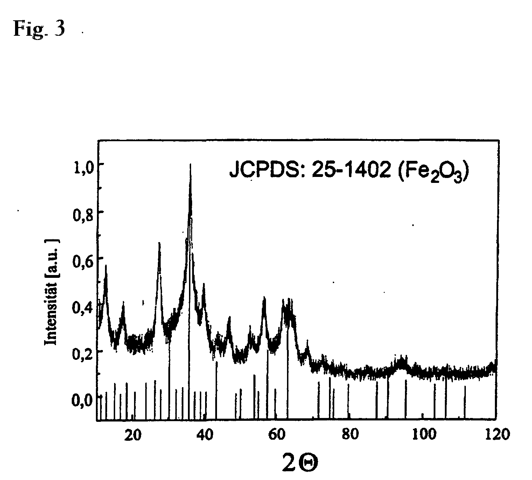

Je nach Metall und Elektrolysebedingungen fallen die Oxide bzw. die Mischoxide in röntgenamorpher oder in kristalliner Form an. Sie zeigen also entweder ein Röntgenbeugungsdiagramm, das dem einer Flüssigkeit ähnelt und nur wenige breite Maxima aufweist (röntgenamorph, Abb. 1) oder das aus einzelnen deutlich abgesetzten Röntgenreflexen besteht (röntgenkristallin, Abb. 2, Abb. 3). Die erhaltenen röntgenamorphen oder röntgenkristallinen Metalloxide trennt man von dem Elektrolyten ab, was kontinuierlich oder chargenweise erfolgen kann. Das Abtrennen kann beispielsweise durch kontinuierliches oder diskontinuierliches Filtrieren oder Zentrifugieren erfolgen. Erforderlichenfalls wäscht man die abgetrennten Metalloxide, vorzugsweise mit dem als Elektrolyt verwendeten organischen Lösungsmittel, um eventuell vorhandene Salzreste zu entfernen. Anschließend werden die Metalloxide getrocknet, beispielsweise bei einer Temperatur im Bereich von 100 °C.

Wünscht man, kristalline Metalloxide oder Mischoxide herzustellen und fallen diese nicht gleich bei der Elektrolyse in der erwünschten Form an, kann man die vom Elektrolyten abgetrennten Metalloxide thermisch nachbehandeln. Beispielsweise können sie dadurch in eine röntgenkristalline Form überführt werden, daß man sie bei einer Temperatur im Bereich zwischen etwa 300 und etwa 1200 und insbesondere zwischen etwa 400 und etwa 1000 °C calciniert. Die Zeitdauer für die Calcinierung hängt von der Umwandlungsgeschwindigkeit der amorphen in die kristallinen Oxide ab und kann beispielsweise im Bereich zwischen etwa 5 Minuten und etwa 4 Stunden liegen. Je nach ausgewähltem Metalloxid kann es dabei vorkommen, daß die Größe der Kristallite mit zunehmender Calcinierungsdauer wächst.

### Ausführungsbeispiele

### Beispiele 1 bis 5: Allgemeine Elektrolysebedingungen:

In 100 ml Tetrahydrofuran (THF) mit einem Wassergehalt im Bereich von 0,5 bis 1 Gew.-% wurden 1 g Tetrabutylammoniumbromid (TBAB) unter leichtem Erwärmen gelöst (40 °C). Als Anode diente ein 20 x 40 mm großes Metallblech (Dicke: 1 mm) und als Kathode ein 20 x 40 mm großes Edelstahl- oder Titanblech (Dicke: 1 mm). Bei einem Stromdurchfluß von 10 - 50 mA wurde die Elektrolyse 12 - 18 Stunden aufrecht erhalten. Während der Dauer der Elektrolyse wurde Luft durch den Elektrolyten geleitet. Zusätzlich wurde der Elektrolyt gerührt. Die Elektrolyse muß bei 35 - 40 °C durchgeführt werden, da unterhalb 35 °C TBAB ausfällt. Bereits nach wenigen Minuten trübte sich die anfangs klare Lösung. Am Ende der Elektrolyse ließ man das Produkt in der Wärme absetzen und filtrierte anschließend mit einer Filtemutsche (Schwarzbandfilter). Das Produkt wurde vom Filter gelöst und bei 100 °C getrocknet. Phasenreinheit, Kristallitgröße und Kristallitgrößenverteilung wurden mittels Röntgenweitwinkeldiffraktometrie (XRD) untersucht.

### Beispiel 1: Herstellung von ZrO₂

Als Anode wurde ein 1 mm dickes Reinzirkonblech (99,99 %) eingesetzt. Das Experiment wurde wie vorstehend beschrieben durchgeführt. Zwischen den Elektroden wurde ein Stromfluß von 40 mA angelegt. Nach Aufarbeitung des Produktes erhielt man 1,5 g weißes Pulver. Die Röntgenuntersuchung ergab keine Bragg-Reflexe sondern ein flüssigkeitsähnliches Beugungsbild (Abb. 1). Zur Bestimmung der Teilchengröße wurde eine TEM-Aufnahme angefertigt. Hieraus ergab sich eine durchschnittliche Teilchengröße von 15 nm.

### Beispiel 2: Herstellung von amorphem Fe₂O₂

Die Prozedur wurde analog Beispiel 1 unter Verwendung einer Eineisenanode (Stromfluß 35 mA) durchgeführt. Nach 12 Stunden konnten 1,2 g röntgenamorphes Pulver isoliert werden.

### Beispiel 3: Herstellung von amorphem TiO₂

Die Prozedur wurde analog Beispiel 1 unter Verwendung einer Reintitananode (Stromfluß 40 mA) durchgeführt. Nach 12 Stunden konnten 1,7 g röntgenamorphes Pulver isoliert werden.

### Beispiel 4: Herstellung von amorphem Al₂O₃

Die Prozedur wurde analog Beispiel 1 unter Verwendung einer Reinaluminiumandode (Stromfluß 45 mA) durchgeführt. Nach 16 Stunden konnten 1,1 g röntgenamorphes Pulver isoliert werden.

### Beispiel 5: Herstellung von amorphem MoO₃

Die Prozedur wurde analog Beispiel 1 unter Verwendung einer Reinmolybdänanode (Stromfluß 40 mA) durchgeführt. Nach 12 Stunden konnten 0,9 g röntgenamorphes Pulver isoliert werden.

### Beispiele 6 und 7:

### Kathodische Abscheidung von Metallen aus Metallsalzlösungen mit in-situ Oxidation

Bei dieser Variante des Verfahrens umgeht man die anodische Auflösung einer Metallanode, indem eine Metallsalzlösung verwendet wird. Die Salze können als Chloride oder Nitrate eingesetzt werden, da diese in THF löslich sind. Als Elektroden werden Inertelektroden aus Platin (20 x 40 mm, 1 mm dick) eingesetzt. Analog zur ersten Variante werden die Metallkationen in Gegenwart von TBAB an der Kathode reduziert und durch gelösten Sauerstoff in-situ oxidiert. Während der Dauer der Elektrolyse wurde Luft durch den Elektrolyten geleitet. Zusätzlich wurde der Elektrolyt gerührt.

### Beispiel 6: Herstellung von amorphem ZrO₂

2 g ZrOCl₂ wurden in 100 ml THF bei 50 °C gelöst Anschließend setzte man 1 g TBAB zu. Bei einer Stromdichte von 40 mA wurde die Elektrolyse 18 Stunden aufrecht erhalten. Danach wurde das erhaltene Produkt wie unter Beispiele 1 bis 5 beschrieben aufgearbeitet. Man erhielt 1,5 g röntgenamorphes Rohprodukt, welches durch thermische Behandlung auf die gewünschte Kristallitgröße kristallisiert werden kann.

### Beispiel 7: Herstellung von amorphem Eisenoxid

Das Verfahren wurde analog Beispiel 6 durchgeführt. Als Elektrolyt wurden 2 g FeCl₂ in 100 ml THF eingesetzt. Es flossen 30 mA während einer Dauer von 16 Stunden. Das Ergebnis waren 2 g röntgenamorphes Rohprodukt.

### Beispiele 8 bis 10: Kristallisationsversuche an amorphen Metalloxiden

Das in den Beispielen 1 bis 7 beschriebene Verfahren liefert immer röntgenamorphe Produkte. Zur Umwandlung der amorphen Rohprodukte in nanokristalline Oxide und zur Entfernung des Leitsalzes (TBAB) werden die Proben thermisch behandelt. Das Ziel ist es hierbei, durch die Calcinierungsbedingungen die Kristallitgröße zu steuern. Angestrebt sind Größen zwischen 5 und 100 nm. Die Proben werden in einem Rohrofen bei einer Temperatur zwischen 400 und 1000 °C calciniert. Die Temperdauer beträgt je nach Temperatur und Probenart zwischen 15 und 200 Minuten. Die entstehenden Verbrennungsgase werden mit einem Luftstrom entfernt.

### Beispiel 8: Kristallisation von ZrO₂

0,3 g Rohprodukt wurden 30 Minuten bei 500 °C behandelt. Das Endprodukt wurde mit XRD untersucht. Das Calcinierungsprodukt besteht aus phasenreinem kubischem Zirkonoxid mit einer volumengemittelten Kristallitgröße von 8 mm. Dieser Wert kann auch mittels Elektronenmikroskopie bestätigt werden. Das Produkt hat eine enge Kristallitgrößenverteilung (Abb. 2). Der σ-Wert betrug 1,29 (ein σ-Wert von 1,00 entspräche einem monodispersen System).

### Beispiel 9: Kristallisation von Eisenoxid

Die Kristallisation von amorphem Eisenoxid läuft bereits bei einer Temperatur von 600 °C mit ausreichender Geschwindigkeit ab. Durch Calcinieren bei 600 °C konnten folgende Kristallitgrößen erhalten werden:

| Zeit (Minuten) | Kristallitgröße [nm] |
|---|---|
| 15 | 10 |
| 30 | 45 |
| 120 | >80 |

### Beispiel 10: Kristallisation von Aluminiumoxid

Zur Kristallisation von Aluminiumoxid werden sehr hohe Temperaturen benötigt. Unterhalb von 900 °C konnte auch nach mehreren Stunden keine Kristallitsation festgestellt werden. Erst bei 1000 °C findet Kristallitbildung (γ-Al₂O₃) und merkliches Kristallitwachstum statt. Nach einer Stunde bei 1000 °C fand man Kristallite mit einer volumengemittelten Kristallitgröße von 10 nm.

### Beispiel 11: Herstellung von nanokristallinen Metalloxiden ohne thermische Nachbehandlung

2 g FeCl₂ wurden bei 40 °C in 100 ml THF gelöst, und anschließend setzte man 1 g Tetraethylammoniumbromid (TEAB) zu. Die Lösung wurde bei 40 mA 8 Stunden elektrolysiert. Während der Dauer der Elektrolyse wurde Luft durch den Elektrolyten geleitet. Zusätzlich wurde der Elektrolyt gerührt. Das Rohprodukt wurde wie unter Beispielen 1 bis 5 beschrieben aufgearbeitet. Es blieben 1,8 g rotbraunes Eisenoxid zurück. Bei diesem Produkt sind bereits im Herstellungszustand Bragg-Reflexe zu beobachten (Abb. 3). Es handelt sich hierbei um die Fe₂O₃-Modifikation mit einer Kristallitgröße von 7 nm.

### Beispiele 12 - 19

### Weitere Versuche gemäß Tabelle 1

### Versuchsbedingungen und Produkte

Allgemeine Bedingungen:
Anode: umzusetzendes Metall; Kathode: Titan
Elektrolyt: 500 ml Tetrahydrofuran mit TBAB als Leitsalz (0,1 mol/l);
Elektrolyse unter Luftzufuhr, Dauer 24 - 48 Stunden, Stromfluß ca. 50 mA. Teilweise Ultraschallbehandlung des Elektrolyten. Bei kristallinen Produkten wurde die mittlere Kristallitgröße D aus der Linienbreite der Röntgenbeugung mittels Scherrer-Formel bestimmt.

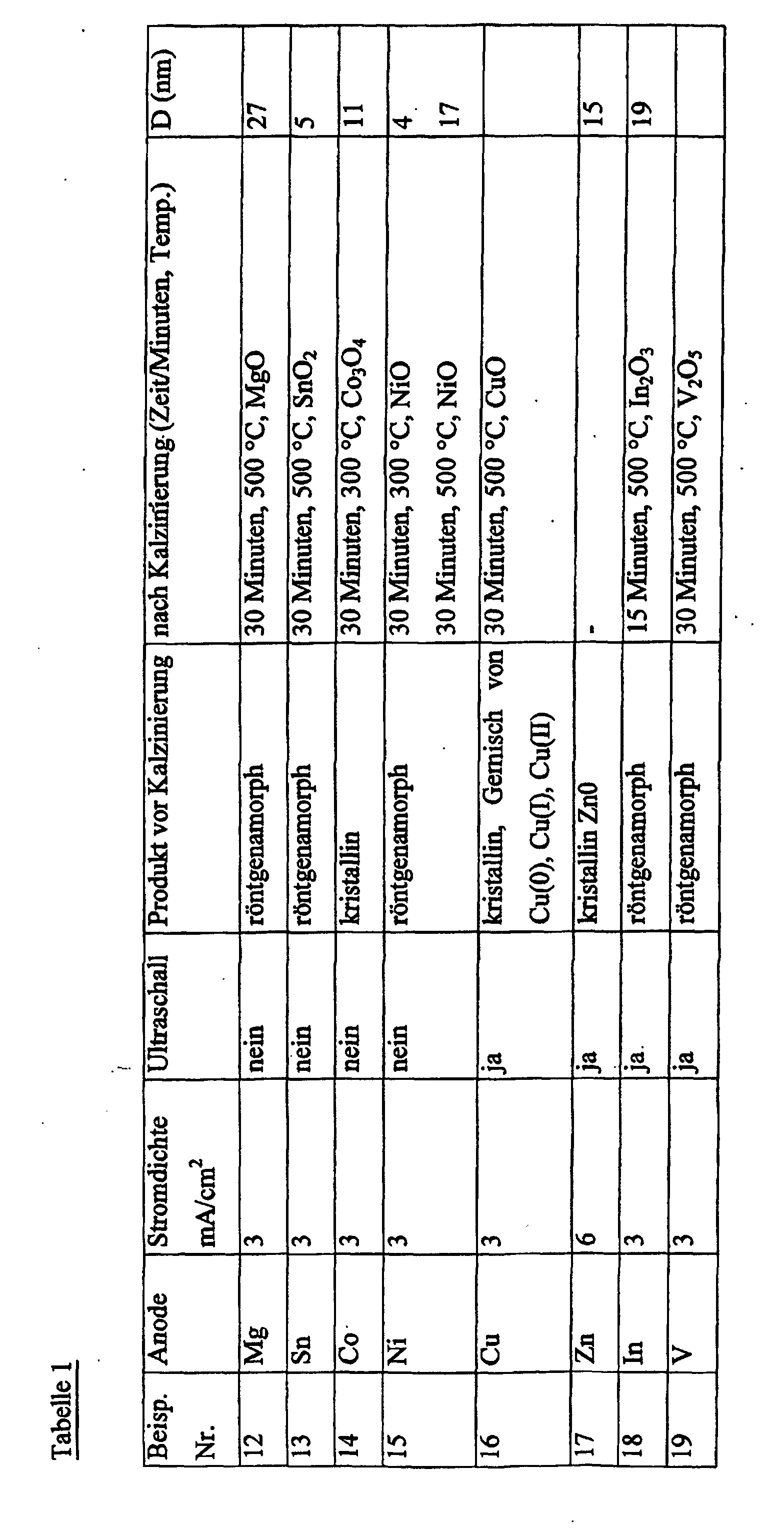

### Abbildungen:

Fig. 1:
   Röntgendiffraktogramm von amorphem ZrO₂-Rohprodukt. Es sind keine Bragg-Reflexe vorhanden
Fig. 2:
   Röntgendiffraktogramm und Kristallitgrößenverteilung einer kalzinierten Zirkonoxidprobe.
Fig 3:
   Röntgendiffraktogramm einer Eisenoxidprobe im Herstellungszustand. Ohne Kalzinieren wird eine nanokristalline Struktur erhalten.

## Patentansprüche

1. Verfahren zur Herstellung pulverförmiger amorpher und/oder kristalliner Oxide von Metallen der dritten bis fünften Hauptgruppe oder der Nebengruppen des Periodensystems, die mittlere Teilchendurchmesser im Bereich von 1 bis 500 nm haben, **dadurch gekennzeichnet, daß** man in einem organischen Elektrolyten gelöste Ionen dieser Metalle in Gegenwart eines Oxidationsmittels unter Verwendung einer Kathode und einer Anode an der Kathode elektrochemisch reduziert, wobei man den Elektrolyten bewegt und/oder ihn mit Ultraschall durchstrahlt.

2. Verfahren nach Anspruch1, **dadurch gekennzeichnet, daß** der organische. Elektrolyt ausgewählt ist aus Ketonen, Alkoholen, Ethern, Nitrilen und aromatischen Verbindungen.

3. Verfahren nach Anspruch 2, **dadurch gekennzeichnet, daß** der organische Elektrolyt ausgewählt ist aus Aceton, Tetrahydrofuran, Acetonitril, Toluol und deren Mischungen mit Alkoholen.

4. Verfahren nach einem oder mehreren der Ansprüche 1 bis 3, **dadurch gekennzeichnet, daß** der organische Elektrolyt zusätzlich 0,01 bis 2 Gew.-%, bezogen auf die Gesamtmenge des organischen Elektrolyten und des Wassers, Wasser enthält.

5. Verfahren nach einem oder mehreren der Ansprüche 1 bis 4, **dadurch gekennzeichnet, daß** der organische Elektrolyt ein gelöstes Leitsalz enthält.

6. Verfahren nach einem oder mehreren der Ansprüche 1 bis 5, **dadurch gekennzeichnet, daß** der organische Elektrolyt eine Temperatur im Bereich von 30 bis 50 °C hat.

7. Verfahren nach einem oder mehreren der Ansprüche 1 bis 6, **dadurch gekennzeichnet, daß** das Oxidationsmittel ausgewählt ist aus Sauerstoff, Wasserstoffperoxid, Peroxoverbindungen, Oxoanionen der Halogene Chlor, Brom oder Iod, bei denen das Halogen eine Oxidationsstufe zwischen +1 und +5 aufweist.

8. Verfahren nach einem oder mehreren der Ansprüche 1 bis 7, **dadurch gekennzeichnet, daß** man zwischen Kathode und Anode eine elektrische Gleichspannung im Bereich von 1 bis 100 Volt anlegt.

9. Verfahren nach einem oder mehreren der Ansprüche 1 bis 8, **dadurch gekennzeichnet, daß** man eine Anode verwendet, die dasjenige Metall enthält, dessen Oxid hergestellt werden soll.

10. Verfahren nach einem oder mehreren der Ansprüche 1 bis 8, **dadurch gekennzeichnet, daß** man eine oder mehrere Anoden verwendet, die unterschiedliche Metalle enthält oder enthalten, deren Mischoxid hergestellt werden soll.

11. Verfahren nach einem oder mehreren der Ansprüche 1 bis 8, **dadurch gekennzeichnet, daß** man ein Salz desjenigen oder Salze derjenigen Metalle in dem Elektrolyten auflöst, dessen Oxid oder deren Mischoxid hergestellt werden soll.

12. Verfahren nach einem oder mehreren der Ansprüche 1 bis 11, **dadurch gekennzeichnet, daß** man das entstandene Metalloxid vom Elektrolyten abtrennt und trocknet.

13. Verfahren nach Anspruch 12, **dadurch gekennzeichnet, daß** man das getrocknete Metalloxid bei einer Temperatur im Bereich zwischen 300 und 1200 °C kalziniert.

## Claims

1. A process for the production of powder-form amorphous and/or crystalline oxides of metals of the third to fifth main group or the secondary groups of the periodic system which have mean particle diameters in the range from 1 to 500 nm, **characterized in that**, using a cathode and an anode, ions of those metals dissolved in an organic electrolyte are electrochemically reduced at the cathode in the presence of an oxidizing agent, the electrolyte being agitated and/or ultrasonicated.

2. A process as claimed in claim 1, **characterized in that** the organic electrolyte is selected from ketones, alcohols, ethers, nitriles and aromatic compounds.

3. A process as claimed in claim 2, **characterized in that** the organic electrolyte is selected from acetone, tetrahydrofuran, acetonitrile, toluene and mixtures thereof with alcohols.

4. A process as claimed in one or more of claims 1 to 3, **characterized in that** the organic electrolyte additionally contains 0.01 to 2% by weight of water, based on the total quantity of organic electrolyte and water.

5. A process as claimed in one or more of claims 1 to 4, **characterized in that** the organic electrolyte contains a dissolved supporting electrolyte.

6. A process as claimed in one or more of claims 1 to 5, **characterized in that** the organic electrolyte has a temperature of 30 to 50°C.

7. A process as claimed in one or more of claims 1 to 6, **characterized in that** the oxidizing agent is selected from oxygen, hydrogen peroxide, peroxo compounds, oxo anions of the halogens chlorine, bromine or iodine where the halogen has an oxidation number of +1 to +5.

8. A process as claimed in one or more of claims 1 to 7, **characterized in that** an electrical d.c. voltage of 1 to 100 volts is applied between the anode and cathode.

9. A process as claimed in one or more of claims 1 to 8, **characterized in that** an anode containing the metal of which the oxide is to be produced is used.

10. A process as claimed in one or more of claims 1 to 8, **characterized in that** one or more anodes containing different metals of which the mixed oxide is to be produced is/are used.

11. A process as claimed in one or more of claims 1 to 8, **characterized in that** a salt of the metal or salts of the metals of which the oxide or the mixed oxide is to be produced is/are dissolved in the electrolyte.

12. A process as claimed in one or more of claims 1 to 11, **characterized in that** the metal oxide formed is separated from the electrolyte and dried.

13. A process as claimed in claim 12, **characterized in that** the dried metal oxide is calcined at a temperature of 300 to 1200°C.

## Revendications

1. Procédé de préparation d'oxydes de métal du troisième à cinquième groupe principal ou des sous-groupes du système périodique, pulvérulents amorphes et/ou cristallins qui ont un diamètre moyen de particules dans la zone de 1 à 500 nm,
**caractérisé en ce qu'**
on réduit les ions dissous, dans un électrolyte organique de ces métaux en présence d'un agent d'oxydation en utilisant une anode et une cathode, par voie électrochimique sur la cathode, dans lequel on déplace les électrolytes et/ou les irradie par des ultrasons.

2. Procédé selon la revendication 1,
**caractérisé en ce que**
l'électrolyte organique est choisi parmi les cétones, les alcools, les éthers, les nitriles et les composés aromatiques.

3. Procédé selon la revendication 2,
**caractérisé en ce que**
l'électrolyte organique est choisi parmi l'acétone, le tétrahydrofuranne, l'acétonitrile, le toluène et leurs mélanges avec des alcools.

4. Procédé selon l'une ou plusieurs des revendications 1 à 3,
**caractérisé en ce que**
l'électrolyte organique contient en supplément de 0,01 à 2 % en poids, rapporté à la quantité totale de l'électrolyte organique et de l'eau -d'eau.

5. Procédé selon l'une ou plusieurs des revendications 1 à 4,
**caractérisé en ce que**
l'électrolyte organique contient un tel conducteur dissout.

6. Procédé selon l'une ou plusieurs des revendications 1 à 5,
**caractérisé en ce que**
l'électrolyte organique a une température dans la zone de 30 à 50°C.

7. Procédé selon l'une ou plusieurs des revendications 1 à 6,
**caractérisé en ce que**
l'agent d'oxydation est choisi parmi l'oxygène, le peroxyde d'hydrogène, les composés peroxo, les anions oxo, des halogène chlore, brome ou iode dans lesquels le halogène possède un degré d'oxydation compris entre + 1 et + 5.

8. Procédé selon l'une ou plusieurs des revendications 1 à 7,
**caractérisé en ce qu**
on dispose entre la cathode et l'anode une tension continue électrique dans la zone de 1 à 100 volts.

9. Procédé selon l'une ou plusieurs des revendications 1 à 8,
**caractérisé en ce qu'**
on utilise une anode qui contient le métal dont on doit préparer l'oxyde.

10. Procédé selon l'une ou plusieurs des revendications 1 à 8,
**caractérisé en ce qu'**
on utilise une ou plusieurs anodes qui renferme ou qui renferment, les différents métaux dont on doit préparer leur oxyde mixte.

11. Procédé selon ou plusieurs des revendications 1 à 8,
**caractérisé en ce qu'**
on dissout un sel de celui-ci ou des sels de ces métaux dans l'électrolyte dont l'oxyde ou son oxyde mixte doit être préparé.

12. Procédé selon l'une ou plusieurs des revendications 1 à 11,
**caractérisé en ce qu'**
on sépare de l'électrolyte l'oxyde métallique qui s'est formé et on le sèche.

13. Procédé selon la revendication 12,
**caractérisé en ce qu'**
on calcine l'oxyde métallique séché à une température dans la plage comprise entre 300° et 1200°C.
